# EUROPÄISCHE PATENTSCHRIFT

(11) **EP 0 452 454 B1**
(45) Veröffentlichungstag und Bekanntmachung des Hinweises auf die Patenterteilung: **15.03.1995**
(21) Anmeldenummer: 90916468.3
(22) Anmeldetag: 30.10.1990
(51) Int. Cl.: H04N 1/00

(54) **GERÄT ZUM SENDEN UND EMPFANGEN VON ÜBER FERNÜBERTRAGUNGSWEGE ZU ÜBERTRAGENDEN BILDDOKUMENTEN**
DEVICE FOR SENDING AND RECEIVING GRAPHICAL DOCUMENTS VIA TELETRANSMISSION LINES
DISPOSITIF POUR EMETTRE ET RECEVOIR DES DOCUMENTS GRAPHIQUES VIA DES LIGNES DE TELETRANSMISSION

(30) Priorität: 03.11.1989 DE 3936684
(43) Veröffentlichungstag der Anmeldung: 23.10.1991
(60) Teilanmeldung: 94110587.6
(73) Patentinhaber: Siemens Nixdorf Informationssysteme Aktiengesellschaft, 33102 Paderborn (DE)
(72) Erfinder: BAITZ, Günter, D-1000 Berlin (DE); BURCHART, Joachim, D-4797 Schlangen 2 (DE); MALKE, Wolfgang, D-1000 Berlin (DE)
(74) Vertreter: Fuchs, Franz-Josef, Dr.-Ing.
(86) Internationale Anmeldenummer: EP9001938
(87) Internationale Veröffentlichungsnummer: WO9107046

(56) Entgegenhaltungen:
- DE-A- 3 513 518
- DE-A- 4 004 418
- GB-A- 2 128 438
- GB-A- 2 217 261
- US-A- 4 266 251
- JAPAN TELECOMMUNICATION REVIEW, vol. 27, no. 4, October 1985, TOKYO JP pages 219-226; H. INAGAKI et al:: "New Model Digital Facsimile Equipment" see fifures 4a, 4c
- PATENT ABSTRACTS OF JAPAN, vol. 5, no. 117 (E-67) (789) 28 July 1981, & JP-A-56 56066 (RICOH) 16 May 1981
- PATENT ABSTRACTS OF JAPAN, vol. 8, no. 53 (E-231) (1490) 9 March 1984, & JP-A-58 205367 (RICOH) 30 November 1983
- PATENT ABSTRACTS OF JAPAN, vol. 8, no. 88 (E-240) (1525) 21 April, 1984, JP-A-59-8472 (RICOH) 17 January 1984
- PATENT ABSTRACTS OF JAPAN, vol. 5, no. 167 (E-79) (839) 24 October 1981, & JP-A-56-94872 (RICOH) 31 July 1981

## Beschreibung

Die Erfindung betrifft ein Gerät der im Oberbegriff des Anspruches 1 genannten Art.

Derartige Geräte werden beispielsweise im Telefaxdienst eingesetzt, bei welchem die Fernübertragungswege durch das Telefonnetz gebildet sind (Fernkopierer).

Die bekannten Geräte erlauben auch einen direkten Nachdruck eines Bilddokumentes durch den internen Drucker.

Bei den meisten herkömmlichen Geräten der im Oberbegriff des Anspruches 1 genannten Art liegen insbesondere die Eingabestation für die Bildvorlagen und die Ausgabestation für die Druckbilder so nahe zusammen, daß ausgegebene Druckbilder und eingelegte Bildvorlagen nicht eindeutig auseinandergehalten werden können. Vor allem dann, wenn das Gerät in der vorne beschriebenen Weise als Universalgerät zum Fernkopieren, Kopieren und Drucken eingesetzt wird, ist es deshalb unerläßlich, daß Verwechslungen von Bildvorlagen mit Druckbildern weitgehend ausgeschlossen werden. Es ist bereits ein Gerät der im Oberbegriff des Anspruches 1 genannten Art mit einer Eingabestation für Bildvorlagen, einer Entnahmestation für diese Bildvorlagen und einer Ausgabestation für die Druckbilder bekannt, bei welchem die Entnahmestation im Fußbereich des Gerätes angeordnet ist; die Eingabestation für die Bildvorlagen und die Ausgabestation für die Druckbilder sind jedoch beide im Kopfbereich des Gerätes angeordnet, so daß die vorne beschriebenen Verwechslungsmöglichkeiten gegeben sind (Fernkopierer Siemens HF2021). Eine ähnliche Anordnung ist durch die EP 0 288 241 A2 bekannt.

Die Erfindung ist im Anspruch 1 definiert.

Gemäß der Erfindung ist vorgesehen, daß bei einem Gerät der beschriebenen Art die Eingabestation für die Bildvorlagen ebenfalls im wesentlichen im Fußbereich des Gerätes an einer der Entnahmestation abgewandten Geräteseite angeordnet ist, so daß die Ausgabestation für die Druckbilder sich nur noch alleine im Kopfbereich des Gerätes befindet. Auf diese Weise sind die ausgegebenen Druckbilder einerseits und die eingelegten Bildvorlagen immer einwandfrei voneinander getrennt, so daß Verwechslungen weitgehend ausgeschlossen sind.

Diese Anordnung ermöglicht auch ein besonders ergonomisches Arbeiten am Gerät, da beispielsweise das aufeinanderfolgende Eingeben mehrerer Druckvorlagen einerseits und deren Entnahme andererseits an zwei einander abgewandten Geräteseiten erfolgt, was der natürlichen Armhaltung entgegenkommt. Andererseits werden ausgegebene Druckbilder eindeutig außerhalb des Weges der Bildvorlagen im Kopfbereich des Gerätes, vorzugsweise auf der Oberseite des Gerätes, abgelegt, so daß eine Verwechslung oder eine irrtümliche Vertauschung von Bildvorlagen und Druckbildern ausgeschlossen sind.

Gemäß einer weiteren Ausgestaltung der Erfindung ist vorgesehen, daß das Gerät einen im wesentlichen rechtekkigen Grundriß hat, und daß der Kopfbereich zumindest an der die Eingabestation aufweisenden Geräteseite gegenüber dem Fußbereich nach Art einer Stufe zurückspringt, wobei die Oberseite dieser Stufe eine Auflagefläche für die Bildvorlagen bildet. Diese Anordnung erleichtert die Handhabung des Gerätes, da die Bildvorlagen nicht in eine Aufnahmeöffnung eingeführt werden müssen, sondern auf die Auflagefläche aufgelegt werden können. Beim Kopieren von Einzelblättern werden diese von der Auflagefläche abgezogen und entlang der Lesevorrichtung zur Entnahmestation transportiert.

Um auch Bücher oder dergleichen, die nicht durch das Gerät transportiert werden können, kopieren bzw. fernkopieren zu können, ist weiterhin erfindungsgemäß vorgesehen, daß die Auflagefläche der Stufe aus einem transparenten Material besteht und daß die Lesevorrichtung unterhalb dieser Auflagefläche mittels eines Verfahrantriebes verfahrbar ist. Auf diese Weise können auch die jeweils aufgeschlagenen Seiten eines Buches oder dergleichen von der Lesevorrichtung aufgenommen werden.

In weiterer Ausgestaltung der Erfindung ist die Stufe zumindest teilweise als an dem Gerät beweglich angeordneter Modul ausgebildet, welcher eine in die Stufe integrierte erste Betriebsstellung und eine aus der Stufe herausgezogene zweite Betriebsstellung einnehmen kann. Bei der ersten Betriebsstellung ist das Gerät für die Verarbeitung von Einzelblatt-Bildvorlagen eingerichtet, wobei die Lesevorrichtung feststeht und die Bildvorlage entlang der Lesevorrichtung bewegt wird; bei der zweiten Betriebsstellung ist das Gerät für das Kopieren von Büchern oder dergleichen eingestellt, wobei die Bildvorlage unbeweglich auf der Auflagefläche liegt und die Lesevorrichtung unterhalb der Auflagefläche verfahren wird.

Um Einzelblatt-Bildvorlagen durch das Gerät zu transportieren, ist ein erstes Transportsystem vorgesehen, welches die Bildvorlagen an der Eingabestation erfaßt und sie im wesentlichen geradlinig entlang der feststehenden Lesevorrichtung durch das Gerät bis zur Entnahmestation transportiert. Ein zweites Transportsystem dient zum Transportieren von Blattmaterial aus wenigstens einer innerhalb des Gerätes angeordneten Papiervorratsstation entlang des Druckers bis zur Ausgabestation.

Bei im wesentlichen allen herkömmlichen Fernkopiergeräten wird zu jeder ausgehenden Sendung ein sogenanntes Sendeprotokoll ausgedruckt, welches ebenfalls an der Ausgabestation für die Druckbilder ausgegeben wird. Die Bedienungsperson hat dann die Aufgabe, das Sendeprotokoll aus anderen ausgegebenen Druckbildern herauszusuchen und den richtigen Bildvorlagen zuzuordnen. Um auch diesen Vorgang zu erleichtern, ist erfindungsgemäß vorgesehen, daß das zweite Transportsystem eine Weiche zum Umlenken des Blattmaterials entlang des Druckers zur Entnahmestation umfaßt. Damit kann das Sendeprotokoll nach dem Drucken von dem zur Ausgabestation führenden Weg abgezweigt und der Entnahmestation zugeführt werden, wo es mit den Bildvorlagen, denen es zugeordnet ist, zusammentrifft.

In einer Ausgestaltung ist vorgesehen, daß eine erste Papiervorratsstation mit wenigstens einer Kassette zur Aufnahme von Einzelblättern vorgesehen ist und/oder eine zweite Papiervorratsstation zur Aufnahme einer Papierrolle, der eine Schneidstation nachgeordnet ist, und daß bei Vorhandensein beider Papiervorratsstationen das zweite Transportsystem eine erste, der ersten Papiervorratsstation zugeordnete, und eine zweite, der zweiten Papiervorratsstation zugeordnete Einlaufstrecke aufweist, die beide vor dem Drucker in einen gemeinsamen Transportweg münden. Diese Anordnung erlaubt es, nach Wahl Einzelblätter zu bedrucken, wenn beispielsweise Formulare oder Briefpapier mit Firmenaufdruck verwendet werden sollen, oder von der Papierrolle abgetrennte Abschnitte.

In einer weiteren Ausgestaltung der Erfindung ist vorgesehen, daß ein drittes Transportsystem zum Transportieren von Blattmaterial aus einer gesonderten Papiervorratsstation vorhanden ist. Diese Anordnung erlaubt es, auf eine Weiche im zweiten Transportsystem, durch die das Sendeprotokoll zur Entnahmestation gelenkt werden soll, zu verzichten. Außerdem besteht die Möglichkeit, zur Erstellung des Sendeprotokolls geringerwertiges Blattmaterial und einen Drucker geringerer Qualität zu verwenden, so daß gegenüber der weiter vorne beschriebenen Lösung geringere Betriebskosten zu erwarten sind.

Weitere Ausgestaltungen der Erfindung ergeben sich aus den Patentansprüchen, der Zeichnung und der Zeichnungsbeschreibung. Es zeigen:
- Fig. 1: in perspektivischer Darstellung und in einer Ansicht von schräg vorne ein Gerät gemäß der Erfindung;
- Fig. 2: das Gerät gemäß der Fig. 1 in einer perspektivischen Darstellung von schräg hinten;
- Fig. 3: in einer verkleinerten Darstellung das Gerät gemäß der Fig. 1 in einer anderen Betriebskonstellation;
- Fig. 4: schematisch eine Darstellung der Transportwege der Bildvorlagen und der Druckbilder im Gerät;
- Fig. 5: eine Alternative zur Fig. 4;
- Fig. 6: ein Blockschaltbild eines Gerätes gemäß Fig. 1.

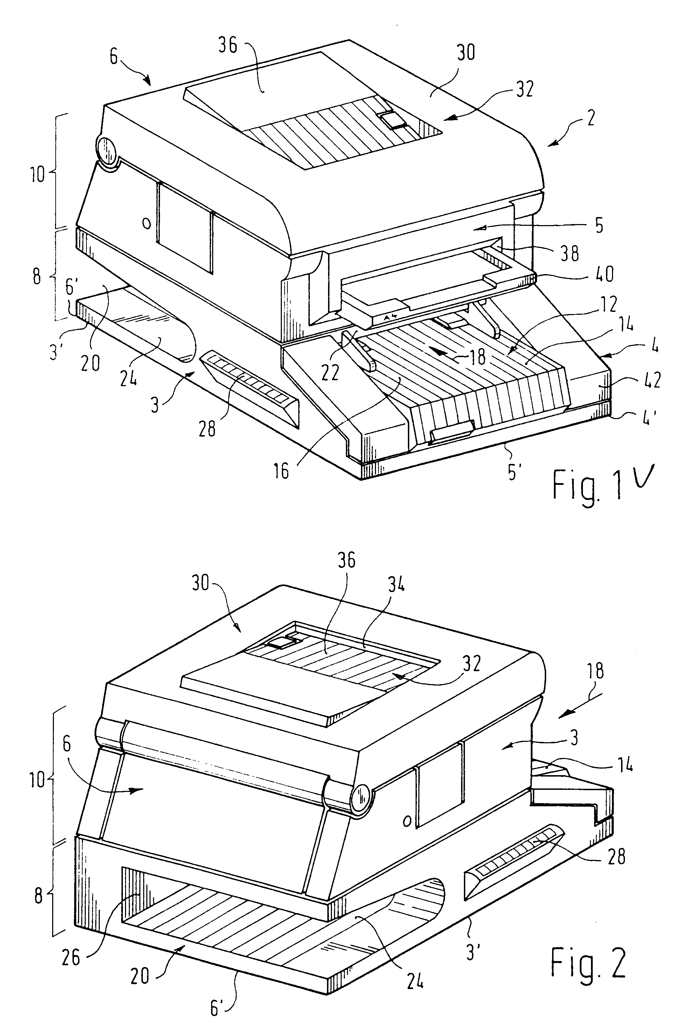

Das in Fig. 1 dargestellte Gerät 2 hat einen im wesentlichen rechteckigen Grundriß. Um die folgende Beschreibung zu erleichtern, sei die der Seite 3′ zugeordnete Geräteseite als Vorderseite 3, die der Grundrißseite 4′ zugeordnete Geräteseite als Rückseite 4 und die den Grundrißseiten 5′ bzw. 6′ zugeordneten Geräteseiten als rechte Seite 5 bzw. linke Seite 6 bezeichnet.

Das Gerät setzt sich aus einem unteren Fußbereich 8 und einem oberen Kopfbereich 10 zusammen. Wie Fig. 1 erkennen läßt, springt der Kopfbereich 10 an der Geräteseite 5 gegenüber dem Fußbereich 8 nach Art einer Stufe zurück, wobei die Oberseite 12 dieser Stufe eine Auflagefläche 14 für die Bildvorlagen bildet.

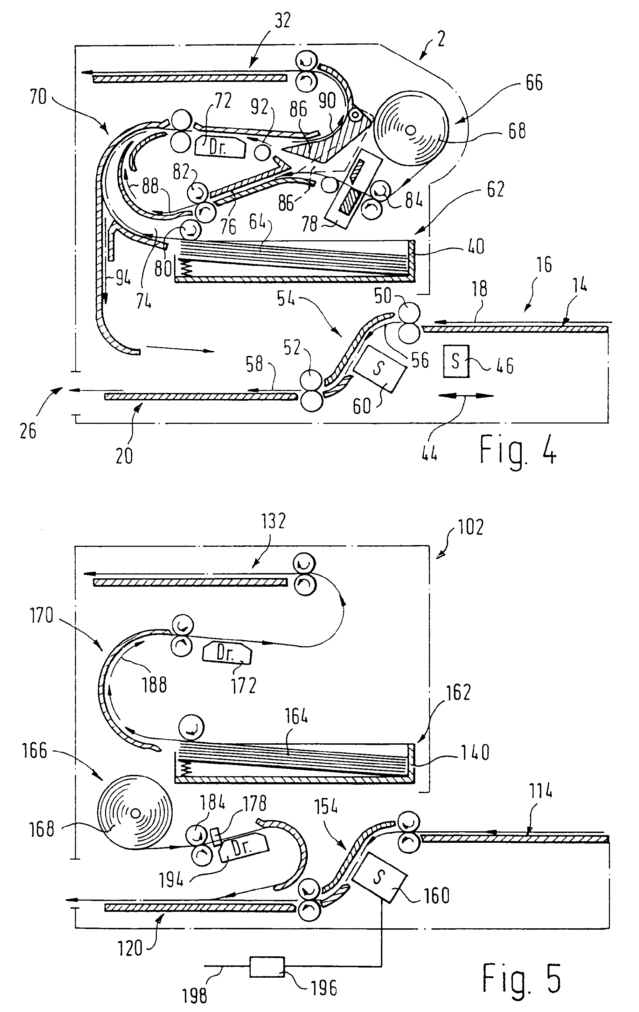

Die Auflagefläche 14 bildet demnach die Eingabestation 16 des Gerätes. In diese Eingabestation 16 eingelegte Einzelblatt-Bildvorlagen werden in der durch den Pfeil 18 bezeichneten Transportrichtung entlang einer in Fig. 1 nicht dargestellten Lesevorrichtung zu der im Bereich der linken Geräteseite 6 befindlichen Entnahmestation 20 befördert, wo sie entnommen werden können (siehe auch Fig. 4 und 5). Die Bildvorlagen treten in das Gerät durch eine Eingabeöffnung 22 ein, die an dem dem Gerät zugewandten Ende der Auflagefläche 14 ausgebildet ist. Die Entnahmestation 20 hat eine im Winkel von 90° zur Transportrichtung 18 gerichtete Entnahmeöffnung 24 und eine in Transportrichtung 18 gerichtete Entnahmeöffnung 26 (siehe auch Fig. 2).

An der Vorderseite 3 ist ein Bedien- und Anzeigefeld 28 vorgesehen.

Im Kopfbereich 10, und zwar auf dessen Oberseite 30 ist die Ausgabestation 32 für die Druckbilder angeordnet. Die Druckbilder verlassen das Gerätegehäuse durch eine Ausgabeöffnung 34 und werden auf einer gegenüber der Oberseite 30 leicht schräggestellten Ablagefläche 36 abgelegt, wo sie entnommen werden können.

Wie insbesondere Fig. 1 zeigt, ist oberhalb der Eingabeöffnung 22 eine Kassettenöffnung 38 ausgebildet, in die eine Einzelblatt-Papiermaterial enthaltende Kassette 40 eingeschoben werden kann. Die aus dieser Kassette 40 entnommenen Einzelblätter werden in einer anhand der Fig. 4 und 5 näher bezeichneten Weise entlang einem Drucker zur Ausgabestation 32 transportiert.

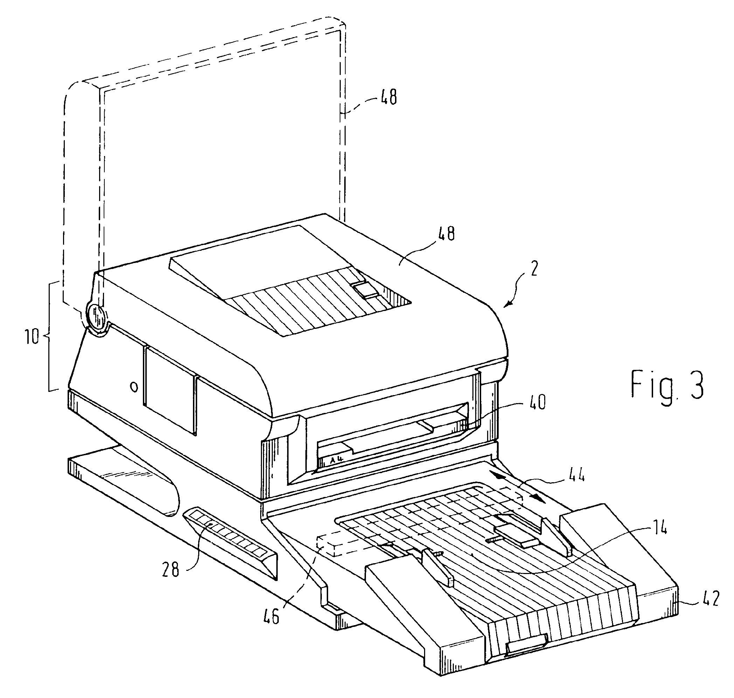

Fig. 3 zeigt das Gerät gemäß Fig. 1 in einer anderen Betriebsstellung. Es ist zu erkennen, daß die Eingabestation 16 wenigstens teilweise als an dem Gerät 2 beweglich angeordneter Modul 42 ausgebildet ist, welcher aus der in Fig. 1 dargestellten ersten Betriebsstellung in eine in Fig. 3 dargestellte zweite Betriebsstellung herausgezogen werden kann. Dadurch wird ein größerer Bereich der Auflagefläche 14 zugänglich, auf welchen größere und sperrigere Druckvorlagen, die nicht durch das Gerät transportiert werden können, aufgelegt werden sollen. Für diesen Fall ist die Auflagefläche 14 aus einem transparenten Material ausgebildet, so daß die Druckvorlage von unten durch die Auflagefläche 14 hindurch abgetastet werden kann. Für diesen Fall ist im Gerät eine in Richtung des Pfeiles 44 beweglich gelagerte Lesevorrichtung 46 vorgesehen, die die auf der Auflagefläche 14 aufliegende Druckvorlage aufnimmt. Die Lesevorrichtung 46 kann eine gesonderte Lesevorrichtung sein, die nur die Aufgabe hat, stationäre Lesevorrichtungen aufzunehmen; sie kann aber auch gleichzeitig die Aufgabe haben, durch das Gerät 2 hindurchtransportierte Druckvorlagen aufzunehmen. In diesem Fall ist vorgesehen, daß die Lesevorrichtung 46 bei der in Fig. 1 dargestellten ersten Betriebsstellung des Moduls 42 im Gerät feststehend arretiert ist, um die an dieser Lesevorrichtung entlang transportierten Druckvorlagen aufzunehmen. Im Falle der in Fig. 3 dargestellten zweiten Betriebsstellung des Moduls 42 wird die Lesevorrichtung 46 automatisch entriegelt, so daß sie ihre Scan-Bewegung in Richtung des Pfeiles 44 ausführen kann.

Wie insbesondere Fig. 3 zeigt, ist für die Abdeckung der Oberseite des Kopfteils 10 ein Deckel 48 vorgesehen, welcher zwischen einer mit durchgezogenen Linien dargestellten Schließstellung und einer gestrichelt dargestellten Öffnungsstellung verschwenkt werden kann. Wenn der Deckel 48 seine Öffnungsstellung einnimmt, werden im Gerät angeordnete Komponenten für Wartungszwecke, zur Entfernung eines Papierstaus usw. zugänglich; außerdem ist vorgesehen, daß außer dem in der Kassette 40 angeordneten Einzelblattmaterial in einer weiteren Papiervorratsstation noch eine Papierrolle angeordnet ist, und daß der Ausdruck wahlweise auf Einzelblattmaterial oder von der Rolle abgeschnittenem Material erfolgen kann, wie genauer aus Fig. 4 ersichtlich ist.

Fig. 4 zeigt sehr schematisch das Gerät 2. Die Eingabestation 16 besteht im wesentlichen aus der Auflagefläche 14, auf die eine Einzelblatt-Druckvorlage aufgelegt werden kann. Diese Druckvorlage wird durch das aus zusammenwirkenden Rollenpaaren 50, 52 bestehende erste Transportsystem 54 erfaßt und in Richtung der Pfeile 18 bzw. 56, 58 entlang der Lesevorrichtung (Scanner) 60 zur Entnahmestation 20 transportiert. Dort kann sie beispielsweise durch die Entnahmeöffnung 26 entnommen werden.

Daneben ist analog zur Fig. 3 eine in Richtung des Pfeiles 44 verfahrbare Lesevorrichtung 46 eingezeichnet, die auf der Auflagefläche 14 stationär aufliegende Bildvorlagen aufnehmen kann, wobei dann die Auflagefläche 14 aus einem transparenten Material bestehen muß. Wie bereits weiter vorne ausgeführt, kann anstelle der beiden Lesevorrichtungen 46 bzw. 60 eine einzige Lesevorrichtung vorgesehen sein, welche beide Aufgaben erfüllen kann.

Das Gerät 2 umfaßt eine erste Papiervorratsstation 62, die durch die Kassette 40 gebildet ist. Diese Kassette 40 dient zur Aufnahme von Einzelblättern 64.

Das Gerät weist außerdem eine zweite Papiervorratsstation 66 auf, in der eine Papierrolle 68 angeordnet werden kann. Das zweite Transportsystem 70, welches das Leerpapier von einer der beiden Papiervorratsstationen 62 bzw. 66 entlang dem Drucker 72 zur Ausgabestation 32 transportiert, weist eine erste Einlaufstrecke 74 auf, über die Einzelblätter 64 dem Transportsystem 70 zugeführt werden; über eine zweite Einlaufstrecke 76 werden von der Papierrolle 68 kommende, durch eine der Einlaufstrecke 76 vorgeschaltete Schneideinrichtung 78 abgetrennte Blattabschnitte dem zweiten Transportsystem 70 zugeführt. Die der ersten Papiervorratsstation 62 zugeordnete Abzugrolle 80 bzw. die der zweiten Papiervorratsstation 66 zugeordneten Transportrollenpaare 82 bzw. 84 können wahlweise angesteuert werden.

Dem zweiten Transportsystem 70 ist eine Weiche 86 zugeordnet, die zwischen der strichpunktiert dargestellten ersten Betriebsstellung und der mit durchgehenden Linien dargestellten zweiten Betriebsstellung verstellt werden kann. Wie Fig. 4 ohne weiteres erkennen läßt, wird von der Papierrolle 68 abgezogenes Material bei der ersten Betriebsstellung der Weiche 86 im Sinne des Pfeiles 88 in das zweite Transportsystem 70 eingeführt und entsprechend dem Pfeil 90 der Ausgabestation 32 zugeführt. Diese Betriebsart gilt für die Erstellung von Druckbildern. Bei der zweiten, mit durchgehenden Linien dargestellten Betriebsstellung der Weiche 86 wird das Blattmaterial entsprechend dem Pfeil 92 in das zweite Transportsystem 70 eingeführt und entlang dem Drucker 72 entsprechend dem Pfeil 94 in den unteren Bereich des Gerätes 2 und zur Entnahmestation 20 geleitet. Diese Betriebsart dient zum Ausdrucken von Sendeprotokollen, so daß die Sendeprotokoll jeweils mit den durch das Gerät 2 hindurchgelaufenen Bildvorlagen, denen sie zugeordnet sind, zusammengeführt werden.

Fig. 5 zeigt ein gegenüber Fig. 4 unterschiedliches Ausführungsbeispiel eines Gerätes 102. Ein erstes Transportsystem 154 dient in analoger Weise zum Transport von auf die Auflagefläche 114 aufgelegten Einzelblattvorlagen entlang der Lesevorrichtung 160 zur Entnahmestation 120.

Eine erste Papiervorratsstation 162 besteht im wesentlichen aus einer Kassette 140 zur Aufnahme von Einzelblättern 164. Die Einzelblätter 164 werden durch das zweite Transportsystem 170 in Richtung der Pfeile 188 entlang dem Drucker 172 der Ausgabestation 132 zugeführt.

Eine zweite Papiervorratsstation 166 ist mit einer Papierrolle 168 bestückt, von der über ein drittes Transportsystem 184 Papier abgezogen und der Entnahmestation 120 zugeführt werden kann. Das von der Papierrolle 168 abgezogene Papier wird in einer Schneidstation 178 in Blattabschnitte geschnitten und entlang einem zweiten Drucker 194 geführt. Das von der Papierrolle 168 abgezogene Papier dient lediglich zur Erstellung von Sendeprotokollen, so daß der Drucker 194 ein Billigdrucker mit geringerer Druckqualität sein kann. Auch diese Anordnung ermöglicht es, die Sendeprotokolle jeweils den Bildvorlagen, denen sie zugeordnet sind, automatisch zuzuordnen.

Wie Fig. 5 erkennen läßt, ist der Lesevorrichtung 160 eine Einrichtung 196 nachschaltbar, die die Bildpunktsignale der hochauflösenden Lesevorrichtung 160 in eine für die Fernübertragung verwertbare Auflösungsnorm umsetzt; die dadurch gebildeten Bildpunktsignale geringerer Auflösung werden über eine Ausgangsleitung 198 dem Fernübertragungsnetz zugeführt.

Bei der Verwendung als Tischkopierer hingegen wird die hohe Auflösung der Lesevorrichtung 160 über der Übersichtlichkeit wegen hier nicht dargestellte Verbindungsleitungen dem hochauflösenden Drucker 172 zugeführt, welcher ein qualitativ hochstehendes Druckbild erzeugt.

Eine der Einrichtung 196 entsprechende Einrichtung ist auch den in Fig. 4 dargestellten Lesevorrichtungen 60 bzw. 76 nachschaltbar, wie der besseren Übersichtlichkeit halber nicht nochmals dargestellt wurde.

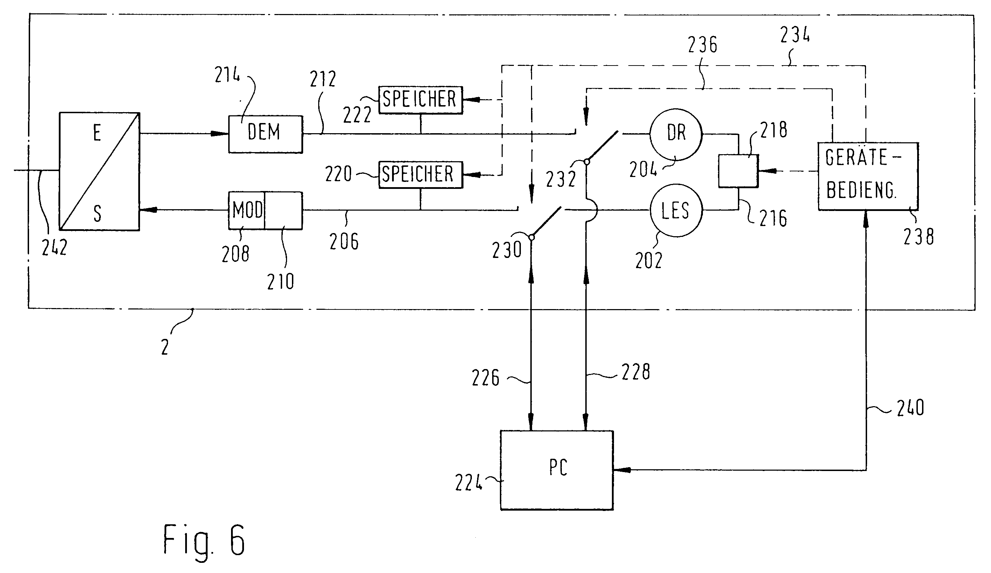

Fig. 6 zeigt ein Blockschaltbild für ein Gerät etwa gemäß Fig. 1. Das Gerät ist als Ganzes wiederum mit 2 bezeichnet. Es besitzt eine Lesevorrichtung 202 und einen Drucker 204. Die Leseeinrichtung ist über eine Leitung 206 mit einer Modulatoreinrichtung 208 verbunden, welcher die von der Lesevorrichtung 202 aufgenommenen Bildpunktsignale in an sich bekannter Weise in für den Sender S verwertbare Signale umwandelt. Dem Modulator 208 ist eine spezielle Einrichtung 210 zugeordnet, welche die hochwertige Auflösungsnorm des Lesegerätes 202 in die für die Fernübertragung festgelegte Auflösungsnorm umwandelt.

Der Drucker 204 ist über eine Leitung 212 mit einem Demodulator 214 verbunden. Der Demodulator wandelt die aus dem Empfänger E kommenden Signale in für den Drukker 204 verwertbare Signale um.

Die Lesevorrichtung 202 und der Drucker 204 sind über eine Leitung 216 direkt miteinander verbunden; in der Leitung 216 ist eine Einrichtung 218 angeordnet, die die von der Lesevorrichtung ausgehenden Bildpunktsignale in für den Drucker verwertbare Bildpunktsignale umwandelt, ohne dabei die hohe Auflösungsqualität des Lesegerätes 202 zu verändern. Dadurch kann das Gerät 2 Kopien hoher Qualität herstellen, so daß es als Bürokopierer verwendbar ist.

Der Leitung 206 ist ein erster Speicher 220 zugeordnet, in welchem über diese Leitung 206 übertragene Daten gespeichert werden können. Entsprechend ist der Leitung 212 ein Speicher 222 zugeordnet, in welchem die Leitung 212 passierende Daten gespeichert werden können.

Eine externe EDV-Anlage, beispielsweise der PC 224, weist zwei Verbindungsleitungen 226, 228 auf, deren erste mit der Leitung 206 über einen Schalter 230 verbindbar ist und deren zweite über einen Schalter 232 mit der Leitung 212 verbindbar ist.

Die Schalter 230 bzw. 232 sind über zugeordnete Steuerleitungen 234 bzw. 236 über eine Gerätebedienungstafel 238 einzeln ansteuerbar. Die Gerätebedienungstafel 238 kann über eine weitere Verbindungsleitung 240 mit dem PC 224 verbunden sein.

Die dargestellte Schaltung ermöglicht es, im PC erstellte Daten direkt über die Leitungen 226 und den Schalter 230 in die Leitung 206 und zum Sender S zu senden. Ebenso können über den Empfänger eingehende Daten über die Leitung 212, den Schalter 232 und die Leitung 228 in den PC geladen werden.

Weiter ist die Möglichkeit gegeben, von der Lesevorrichtung 202 aufgenommene Daten über den Schalter 230 und die Leitung 226 in den PC einzuspeisen. Über die Leitung 228 und den Schalter 232 kann außerdem vom PC direkt der Drucker 204 angesteuert werden.

Der Speicher 220 erlaubt es, vom PC 224 oder von der Lesevorrichtung 202 kommende Daten zu speichern, während gleichzeitig über den Empfänger E Daten eingehen; wenn die von der Empfänger/sendereinheit ausgehende Fernübertragungsleitung 242 wieder frei ist, können die Daten aus dem Speicher 220 über den Sender S gesendet werden. Andererseits können während eines Sendevorganges im Empfänger eingehende Daten im Speicher 222 abgelegt werden, wenn der Drucker 204 durch einen internen Kopiervorgang belegt ist; nach Freiwerden des Druckers 204 können dann die im Speicher 222 abgelegten Daten durch den Drucker 204 ausgedruckt werden.

## Patentansprüche

1. Gerät zum Senden und Empfangen von über Fernübertragungswege zu übertragenden grafischen Bilddokumenten, umfassend eine Eingabestation und eine Entnahmestation für eine Einzelblatt-Bildvorlage sowie ein Transportsystem zum Transportieren der Bildvorlage entlang einer Lesevorrichtung von der Eingabestation zur Entnahmestation, ferner umfassend eine Ausgabestation für einen bedruckten Druckträger sowie ein Transportsystem zum Transportieren des Druckträgermaterials von einer Materialvorratsstation entlang einem Drucker zur Ausgabestation, wobei die Ausgabestation im Kopfbereich und die Entnahmestation im Fußbereich des Gerätes vorgesehen sind, dadurch **gekennzeichnet**, daß sowohl die Eingabestation (16) als auch die Entnahmestation (20) für die Druckvorlage im Fußbereich (8) des Gerätes (2) an zwei einander abgewandten Geräteseiten (3, 6) angeordnet sind, so daß sich die Ausgabestation (32) im Kopfbereich (10) des Gerätes (2) weitgehend getrennt von der Eingabestation (16) und Entnahmestation (20) befindet.

2. Gerät nach Anspruch 1, **dadurch gekennzeichnet**, daß die Ausgabestation (32) sich auf der Oberseite (30) des Gerätes (2) befindet.

3. Gerät nach Anspruch 1 oder 2, **dadurch gekennzeichnet,** daß es einen im wesentlichen rechteckigen Grundriß hat und daß der Kopfbereich (10) zumindest an der die Eingabestation (16) aufweisenden Geräteseite (5) gegenüber dem Fußbereich (8) nach Art einer Stufe zurückspringt, wobei die Oberseite (12) dieser Stufe eine Auflagefläche (14) für die Bildvorlagen bildet.

4. Gerät nach Anspruch 3, **dadurch gekennzeichnet**, daß die Stufe zumindest teilweise als an dem Gerät (2) beweglich angeordneter Modul (42) ausgebildet ist, welcher eine in die Stufe integrierte erste Betriebsstellung und eine aus der Stufe herausgezogene zweite Betriebsstellung einnehmen kann, wobei die Auflagefläche (14) der Stufe aus einem transparenten Material besteht und wobei eine unterhalb dieser Auflagefläche (14) mittels eines Verfahrantriebes verfahrbare Lesevorrichtung (46) vorgesehen ist.

5. Gerät nach Anspruch 4, dadurch **gekennzeichnet**, daß eine ortsfeste, auf dem Transportweg des Druckträgers angeordnete Lesevorrichtung (60) und eine verfahrbare Lesevorrichtung (46) vorgesehen sind und daß bei der ersten Betriebsstellung des Moduls (42) die ortsfeste Lesevorrichtung (60) und bei der zweiten Betriebsstellung des Moduls (42) die verfahrbare Lesevorrichtung (60) jeweils automatisch aktiviert ist.

6. Gerät nach Anspruch 4, dadurch **gekennzeichnet**, daß eine einzige Lesevorrichtung (160) vorgesehen ist, die bei der ersten Betriebsstellung des Moduls (42) in einer auf dem Transportweg des Druckträgers befindlichen Stellung fixiert und bei der zweiten Betriebsstellung des Moduls (42) entriegelt und unterhalb der Auflagefläche (14) verfahrbar ist.

7. Gerät nach einem der Ansprüche 1 bis 6, **dadurch gekennzeichnet**, daß das Transportsystem (70) für das Druckträgermaterial eine Weiche (86) zum Umlenken des Druckträgermaterials entlang des Drukkers (72) zur Entnahmestation (20) umfaßt.

8. Gerät nach einem der Ansprüche 1 bis 6, **dadurch** **gekennzeichnet,** daß ein drittes Transportsystem (184) zum Transportieren von Blattmaterial aus einer gesonderten Papiervorratsstation (166) entlang eines zweiten Druckers (194) zur Entnahmestation vorgesehen ist.

9. Gerät nach einem der Ansprüche 1 bis 8, **dadurch** **gekennzeichnet**, daß die Entnahmestation (20) ein innerhalb der Gerätekontur ausgebildeter Schacht mit einer in wenigstens eine seitliche Außenwand des Gerätes mündenden Entnahmeöffnung (24, 26) ist.

10. Gerät nach Anspruch 9, **dadurch gekennzeichnet**, daß eine Entnahmeöffnung (24) vorgesehen ist, die in eine gegenüber der Transportrichtung (18) des ersten Transportsystems (54) um 90° verdrehte Richtung geöffnet ist.

11. Gerät nach Anspruch 10, **dadurch gekennzeichnet**, daß zusätzlich eine Entnahmeöffnung (26) vorgesehen ist, die in eine in Transportrichtung (18) des ersten Transportsystems weisende Richtung geöffnet ist.

12. Gerät nach einem der Ansprüche 1 bis 11, **dadurch gekennzeichnet**, daß die Materialvorratsstation (62) eine Ladeöffnung (38) zum Entnehmen und zum Einführen einer Kassette (40) aufweist, die oberhalb der Eingabestation (16) angeordnet ist.

## Claims

1. Device for sending and receiving graphical picture documents to be transmitted via teletransmission paths, comprising an input station and a removal station for a single-sheet picture master copy and a transport system for transporting the picture master copy along a reading device from the input station to the removal station, further comprising an output station for a printed-on printing carrier and a transport system for transporting the printing carrier material from a material supply station along a printer to the output station, the output station being provided in the top region and the removal station in the base region of the device, characterized in that both the input station (16) and the removal station (20) for the printing master copy are arranged in the base region (8) of the device (2) at two mutually opposite sides (3, 6) of the device so that the output station (32) in the top region (10) of the device (2) is located largely separate from the input station (16) and removal station (20).

2. Device according to Claim 1, characterized in that the output station (32) is located on the upper side (30) of the device (2).

3. Device according to Claim 1 or 2, characterized in that it has an essentially rectangular ground plan and in that, at least on the device side (5) having the input station (16), the top region (10) stands back with respect to the base region (8) in the fashion of a step, the upper side (12) of this step forming a supporting surface (14) for the picture master copies.

4. Device according to Claim 3, characterized in that the step is at least partially constructed as a module (42), displaceable on the device (2), which can assume a first operating position, integrated into the step, and a second operating position, pulled out of the step, the supporting surface (14) of the step consisting of a transparent material and a reading device (46) being provided which can be moved by means of a moving drive below said supporting surface (14).

5. Device according to Claim 4, characterized in that a stationary reading device (60), arranged on the transport path of the printing carrier, and a movable reading device (46) are provided, and in that in the case of the first operating position of the module (42) the stationary reading device (60) and in the case of the second operating position of the module (42) the movable reading device (46) are in each case activated automatically.

6. Device according to Claim 4, characterized in that a single reading device (160) is provided which, in the case of the first operating position of the module (42) is fixed in a position which is located on the transport path of the printing carrier and, in the case of the second operating position of the module (42), is unlocked and movable below the supporting surface (14).

7. Device according to one of Claims 1 to 6, characterized in that the transport system (70) for the printing carrier material comprises a diverter (86) for deflecting the printing carrier material along the printer (72) to the removal station (20).

8. Device according to one of Claims 1 to 6, characterized in that a third transport system (184) is provided for transporting sheet material from a separate paper supply station (166) along a second printer (194) to the removal station.

9. Device according to one of Claims 1 to 8, characterized in that the removal station (20) is a shaft which is constructed inside the contour of the device and has a removal opening (24, 26) which opens at least into one lateral outer wall of the device.

10. Device according to Claim 9, characterized in that a removal opening (24) is provided which is open in a direction which is rotated about 90° with respect to the transport direction (18) of the first transport system (54).

11. Device according to Claim 10, characterized in that a removal opening (26) is additionally provided, which is open in a direction pointing in the transport direction (18) of the first transport system.

12. Device according to one of Claims 1 to 11, characterized in that the material supply station (62) has a loading opening (38) for removing and inserting a tray (40) which is arranged above the input station (16).

## Revendications

1. Appareil pour émettre et recevoir des documents graphiques devant être transmis par l'intermédiaire de voies de télétransmission, comprenant un poste d'entrée et un poste de prélèvement pour un original sur feuille individuelle ainsi qu'un système de transport pour transporter l'original le long d'un dispositif de lecture du poste d'entrée au poste de prélèvement, et comportant en outre un poste de sortie pour un support d'impression imprimé ainsi qu'un système de transport pour transporter le matériau du support d'impression d'un poste de réserve du matériau au poste de sortie, le long d'une imprimante, le poste de sortie étant prévu dans la tête et le poste de prélèvement dans le pied de l'appareil, caractérisé par le fait qu'aussi bien le poste d'entrée (16) que le poste de prélèvement (20) pour l'original imprimé sont disposés dans le pied (8) de l'appareil (2) sur deux côtés (3,6) de ce dernier, qui sont situés à l'opposé l'un de l'autre, de sorte que le poste de sortie (32) est situé, dans la partie de tête (10) de l'appareil (2), en étant bien séparé du poste d'entrée (16) et du poste de prélèvement (20).

2. Appareil suivant la revendication 1, caractérisé par le fait que le poste de sortie (32) est situé sur le côté supérieur (30) de l'appareil.

3. Appareil suivant la revendication 1 ou 2, caractérisé par le fait qu'il possède un contour en projection horizontale sensiblement rectangulaire et que la partie de tête (10) est en retrait par rapport à la partie formant pied (8), au moins sur le côté (5) de l'appareil, qui est tourné vers le poste d'entrée (16), de manière à former une partie étagée, la face supérieure (12) de cette partie étagée formant une surface de support (14) pour les originaux.

4. Appareil suivant la revendication 3, caractérisé par le fait que la partie étagée est constituée au moins en partie sous la forme d'un module (42) monté mobile sur l'appareil (2) et qui peut prendre une première position de service, intégrée dans la partie étagée, et une seconde position de service qui est ressortie de la partie étagée, la surface de support (14) de la partie étagée étant réalisée en un matériau transparent, tandis qu'il est prévu un dispositif de lecture (46) qui est déplaçable au-dessous de cette surface de support (14) au moyen d'un dispositif d'entraînement.

5. Appareil suivant la revendication 4, caractérisé par le fait qu'il est prévu un dispositif fixe de lecture (60), qui est disposé sur le trajet de transport du support d'impression, et un dispositif mobile de lecture (46), et que lorsque le module (42) est dans la première position de service, le dispositif fixe de lecture (60), et, lorsque le module (42) est dans la seconde position de service, le dispositif mobile de lecture (60) est respectivement activé de façon automatique.

6. Appareil suivant la revendication 4, caractérisé par le fait qu'il est prévu un seul dispositif de lecture (160) qui est fixé dans une position située dans le trajet de transport du support d'impression, lorsque le module (42) est dans une première position de service, et est déverrouillé, lorsque le module (42) est dans la seconde position de service, et peut être déplacé au-dessous de la surface de support (14).

7. Appareil suivant l'une des revendications 1 à 6, caractérisé par le fait que le système de transport (70) pour le matériau du support d'impression comprend un aiguillage (86) servant à faire dévier le matériau du support d'impression le long de l'imprimante (72) en direction du poste de prélèvement (20).

8. Appareil suivant l'une des revendications 1 à 6, caractérisé par le fait qu'il est prévu un troisième système de transport (184) pour transporter un matériau en forme de feuille d'un poste particulier de réserve de papier (166) au poste de prélèvement, le long d'une seconde imprimante (194).

9. Appareil suivant l'une des revendications 1 à 8, caractérisé par le fait que le poste de prélèvement (20) est un logement aménagé à l'intérieur du contour de l'appareil et comportant une ouverture de prélèvement (24,26) débouchant dans au moins une paroi latérale extérieure de l'appareil.

10. Appareil suivant la revendication 9, caractérisé par le fait qu'il est prévu une ouverture de prélèvement (24), qui est ouverte dans une direction à 90° de la direction de transport (18) du premier système de transport (54).

11. Appareil suivant la revendication 10, caractérisé par le fait qu'il est prévu en supplément une ouverture de prélèvement (26), qui s'ouvre dans une direction dirigée dans la direction de transport (18) du premier système de transport.

12. Appareil suivant l'une des revendications 1 à 11, caractérisé par le fait que le poste de réserve du matériau (62) comporte une ouverture de chargement (38) servant à prélever et introduire une cassette (40) et qui est disposée au-dessus du poste d'entrée (16).
